# EUROPÄISCHE PATENTSCHRIFT

(11) **EP 3 781 897 B1**
(45) Veröffentlichungstag und Bekanntmachung des Hinweises auf die Patenterteilung: **07.06.2023**
(21) Anmeldenummer: 19721973.6
(22) Anmeldetag: 18.04.2019
(51) Int. Cl.: G01B 11/06, G01S 7/41, G01S 13/88

(54) **VERFAHREN UND THZ-MESSGERÄT ZUR VERMESSUNG EINES MESSOBJEKTES MIT ELEKTROMAGNETISCHER STRAHLUNG**
METHOD AND THZ MEASURING DEVICE FOR MEASURING A MEASUREMENT OBJECT USING ELECTROMAGNETIC RADIATION
PROCÉDÉ ET APPAREIL DE MESURE THZ PERMETTANT DE MESURER UN OBJET DE MESURE AU MOYEN DU RAYONNEMENT ÉLECTROMAGNÉTIQUE

(30) Priorität: 18.04.2018 DE 102018109250
(43) Veröffentlichungstag der Anmeldung: 24.02.2021
(73) Patentinhaber: iNOEX GmbH Innovationen und Ausrüstungen für die Extrusionstechnik, 49324 Melle (DE)
(72) Erfinder: KLOSE, Ralph, 49324 Melle (DE)
(74) Vertreter: Bremer, Ulrich
(86) Internationale Anmeldenummer: PCT/DE2019/100366
(87) Internationale Veröffentlichungsnummer: WO 2019/201396

(56) Entgegenhaltungen:
- US-A1- 2015 060 673
- US-A1- 2015 212 060
- Inoex Gmbh: "WARP portable Erstes THz-basiertes Handgerät zur Wanddicken- und Durchmessermessung von Kunststoffrohren", Extrusion, 1. Juni 2017 (2017-06-01), Seiten 24-25, XP055598027, Gefunden im Internet: URL:https://www.extrusion-info.com/upload/ magazines/extrusion/4-2017/files/assets/co mmon/downloads/Extrusion%204-2017.pdf [gefunden am 2019-06-19]

## Beschreibung

Die Erfindung betrifft ein Verfahren zur Vermessung eines Messobjektes mit elektromagnetischer Strahlung, sowie ein entsprechendes Messgerät.

THz-Messgeräte zur Messung von Abständen und Schichtdicken senden THz-Strahlung z. B. im Frequenzbereich von 0,01 bis 10 THz aus und können an Messobjekten reflektierte THz-Strahlung detektieren. Somit können Abstände von Grenzflächen zu dem THz-Messgerät z. B. direkt als Laufzeitmessungen oder bei einer Frequenzmodulation auch als Frequenzverschiebung detektiert werden. Der Spektralbereich erstreckt sich somit durchaus auch in den Millimeterwellenbereich.

Hierdurch können z. B. die Kunststoffrohre direkt nach ihrer Extrusion vermessen werden, um Unregelmäßigkeiten der Schichtdicken berührungsfrei zu detektieren. Die THz-Strahlung wird hierbei an den Grenzflächen teilweise reflektiert, da das Material der Messobjekte wie z. B. Kunststoff einen gegenüber der Umgebungsluft höheren Brechungsindex aufweist.

Die Auflösung der THz-Messgeräte hängt von ihrem physikalischen Messprinzip und der Modulation ab. Optische Messvorrichtungen, z. B. mittels Kurzzeit-Lasern und hierdurch angeregten Sende- und Empfangsantennen ermöglichen breitbandige Messungen und hohe Auflösungen der Schichtdicken. Sie sind jedoch entsprechend apparativ aufwendig und teuer. Vollelektronische THz-Messgeräte weisen im Allgemeinen Sende- und Empfangs-Dipole auf, die die THz-Strahlung aussenden und empfangen; sie werden oftmals in Frequenzmodulation oder als gepulste Strahlung betrieben. Höhere Auflösungen zur Detektion kleiner Abstände erfordern hierbei oftmals hohe Bandbreiten der verwendeten Frequenzbereiche. Derartige hohe Bandbreiten können jedoch wiederum andere Prozesse stören, in denen Datenkommunikation oder Untersuchungen in vorgegebenen Frequenzbereichen erfolgen. So sind im Allgemeinen offene Untersuchungen mit ungerichteter, frei austretender Strahlung ohne äußere Abschirmungen auf vorgegebene Frequenzbereiche, z.B. ISM-Bereiche (industrial, scientific, medical) beschränkt, wenn nicht eine Abschirmung oder äußere Abkapselung z.B. durch ein äußeres Gehäuse nachgewiesen werden kann.

US2015/060673A1 zeigt ein System und ein Verfahren zum Bestimmen von Anomalien, die bei einer Person versteckt vorgesehen sind. Hierzu ist eine Detektionssonde vorgesehen mit einem elektromagnetischen Sender und einem elektromagnetischen Empfänger. Der elektromagnetische Sender gibt elektromagnetische Impulse aus, und der Empfänger nimmt entsprechend innerhalb eines geeigneten Wellenform-Fensters an spezifischen Zeitpunkten elektromagnetische Impulse auf. Die elektromagnetischen Impulse liegen innerhalb des Terahertz-Spektralbereichs von 0,04 bis 4 THz. Der Sender und der Empfänger können in einer tragbaren Mess-Sonde vorgesehen sein.

US2015/0212060A1 zeigt eine Beschichtungseinrichtung zum Auftragen einer Schicht auf einen Körper, wobei ein Sensorsystem zur Charakterisierung einer Beschichtung des Körpers vorgesehen ist. Die Sensierung erfolgt kontaktlos durch THz-Strahlung. Hierbei wird Strahlung von einer Lichtquelle über ein Strahlungskabel zu einem THz-Sender geführt und von dort auf den zu untersuchenden Körper ausgegeben.

Der Artikel "WARP portable - das innovative Handmessgerät für Wanddicken- und Durchmessermessung von Kunststoffrohren", Extrusion, 1. Juni 2017 (2017-06-01), Seiten 24-25, XP055598027, beschreibt ein Handmessgerät, das von einem Benutzer ergriffen und an Kunststoffrohre angelegt werden kann, um Wanddicken sowie Innen- und Außendurchmesser zu vermessen.

Der Erfindung liegt die Aufgabe zugrunde, ein Verfahren zur THz-Vermessung von Messobjekten und ein THz-Messgerät zu schaffen, die mit geringem Aufwand sichere Vermessungen von Messobjekten, insbesondere Schichtdickenmessungen von z.B. rohrförmigen bzw. zylindrischen Messobjekten ermöglichen.

Diese Aufgabe wird durch ein THz-Messverfahren und ein THz- Messgerät nach den unabhängigen Ansprüchen gelöst. Die Unteransprüche beschreiben bevorzugte Weiterbildungen.

Das erfindungsgemäße THz-Messgerät ist insbesondere zur Durchführung eines erfindungsgemäßen THz-Messverfahrens vorgesehen; das erfindungsgemäße Verfahren kann insbesondere mit dem erfindungsgemäßen THz-Messgerät durchgeführt werden.

Hierbei sind die Phasen einer Vormessung und einer Hauptmessung vorgesehen. Die Vormessung dient zur Erfassung eines Messobjektes und Ermittlung eines Abstandes des Messobjektes von dem THz-Messgerät bzw. von dessen THz-Transceiver. In der Vormessung wird insbesondere ermittelt, ob der ermittelte Abstand des Messobjektes bzw. dessen äußerer Grenzfläche einen Grenzabstand unterschreitet.

Die Phase der Vormessung weist somit die Schritte auf
- Ermitteln, ob ein Messobjekt erfasst ist,
- falls das Messobjekt erfasst ist, Ermitteln eines aktuellen Abstandes des THz-Messgeräts oder des THz-Transceivers von der Grenzfläche,
- Vergleichen des ermittelten aktuellen Abstandes mit einem Grenzabstand, und
- bei Unterschreiten des Grenzabstandes nachfolgend Einleiten einer Hauptmessung oder Anzeigen einer Einleitung der Hauptmessung.

Falls ein Messobjekt erfasst ist und weiterhin ermittelt wird, dass der Grenzabstand unterschritten ist, wird nachfolgend direkt die Hauptmessung eingeleitet oder dem Benutzer angezeigt, dass er die Hauptmessung einleiten kann.

In der Hauptmessung erfolgt dann eine Messung mit einem Hauptmessungs- THz-Sendestrahl mit einer Hauptmessungs-Bandbreite. In der Hauptmessung wird dann z.B. die Schichtdicke, z. B. eine Wanddicke eines Kunststoffrohres, sehr genau ermittelt. Weiterhin oder alternativ zu einer Wanddicke-Messung können aber auch andere Vermessungen der geometrischen Verhältnisse oder auch spektroskopische Untersuchungen bzw. Analysen erfolgen.

Gemäß einer bevorzugten Ausbildung wird in der Vormessung zunächst ein erster THz-Sendestrahl mit einer kleineren ersten Bandbreite ausgegeben. In der Hauptmessung erfolgt dann die Messung mit dem Hauptmessungs- THz-Sendestrahl, der somit einen zweiten THz-Sendestrahl darstellt, mit der Hauptmessungs-Bandbreite, die somit eine zweite Bandbreite darstellt, wobei die zweite Bandbreite bzw. Hauptmessungs-Bandbreite größer als die erste Bandbreite ist.

In der Phase der Vormessung ist das THz-Messgerät gegebenenfalls von dem Messobjekt noch weiter entfernt, so dass die ausgesandte THz-Strahlung störend an dem Messobjekt vorbei gelangen und in der Umgebung gegebenenfalls negative Auswirkungen haben kann. Somit ist erfindungsgemäß vorzugsweise vorgesehen, in dieser Phase der Vormessung die Bandbreite zu beschränken, da für die Erfassung des Messobjektes nur eine zumindest grobe Ermittlung des Abstandes erforderlich ist; es reicht grundsätzlich eine Abschätzung, dass der Grenzabstand unterschritten ist.

Falls ermittelt wird, dass der Grenzabstand unterschritten ist, kann die vom THz-Messgerät ausgesandte THz-Strahlung nicht störend am Messobjekt vorbei gelangen und direkt negative Auswirkungen in der Umgebung hervorrufen; vielmehr wird die THz-Strahlung mit hoher Sicherheit in das Messobjekt eingestrahlt und in diesem reflektiert und bzw. gestreut oder auch absorbiert. Daher kann in der Phase der Hauptmessung die größere zweite Bandbreite gewählt werden, die eine höhere Auflösung, insbesondere auch eine genauere Ermittlung der Schichtdicke ermöglicht.

In der Phase der Vormessung kann bei einem vollelektronischen Messgerät z. B. eine Bandbreite von 1 GHz gewählt werden; in der Phase der Hauptmessung kann eine höhere Bandbreite von z.B. 20, 30 oder 40 GHz, aber auch deutlich höher, z.B. 1000 GHz oder mehr gewählt werden.

Die Frequenz der THz-Strahlung kann insbesondere im Frequenzbereich von 0,01 bis 10 THz liegen, sowohl bei dem Messgerät als auch in dem Verfahren.

Der Wellenlängenbereich der THz-Strahlung kann somit als Terahertz-Strahlung, Mikrowellen-Strahlung oder auch Radar-Strahlung bezeichnet werden.

Somit sind erfindungsgemäß z. B. auch Messungen mit hoher Bandbreite ohne äußere Abschirmung möglich. Hierbei ist zum einen eine Aufweitung der Bandbreite möglich; so kann in der Phase der Vormessung ein Frequenzbereich eines schmalbandigen ISM-Bereiches gewählt werden, und nachfolgend in der Hauptmessung ein breiterer Frequenzbereich um die Frequenzen der ersten Messung. Weiterhin können jedoch in der Hauptmessung auch andere Frequenzbereiche gewählt werden, z.B. andere, breitbandige Frequenzbereiche. Ergänzend oder alternativ kann auch die Leistung bzw. Intensität in der Phase der Hauptmessung erhöht werden.

Gemäß einer bevorzugten Ausbildung ist das erfindungsgemäße Verfahren derartig ausgebildet, dass die Phasen oder ein Teil der Phasen auf einer Anzeigeeinrichtung angezeigt werden und/oder durch eine optische Anzeigeeinrichtung, insbesondere als optisches Signal, ausgegeben werden.

Gemäß einer bevorzugten Ausbildung ist das erfindungsgemäße Verfahren dahingehend weitergebildet, dass in der Phase der Hauptmessung bei der Vermessung des Messobjektes mit dem Hauptmessungs-THz-Sendestrahl eine Messung von geometrischen Eigenschaften erfolgt, insbesondere eine Schichtdicke zwischen Grenzflächen des Messobjektes ermittelt wird.

Gemäß einer bevorzugten Ausbildung ist das erfindungsgemäße THz-Messgerät dahingehend weitergebildet, dass es eine Ausgabeeinrichtung aufweist zur akustischen oder optischen Ausgabe oder Anzeige der Phasen, insbesondere der Vormessung zur Korrektur der Positionierung durch den Benutzer.

Gemäß einer bevorzugten Ausbildung ist das erfindungsgemäße THz-Messgerät dahingehend weitergebildet, dass es autark ist oder drahtlos oder über eine flexible Daten- und Stromversorgung mit einer stationären Einheit verbunden ist, zur Handhabung und zur Einstellung des Abstandes durch den Benutzer.

Erfindungsgemäß kann insbesondere ein tragbares Messgerät eingesetzt werden, das der Benutzer somit in der Phase der Vormessung frei handhaben und positionieren kann. Sobald der Benutzer das Messgerät richtig positioniert hat, z.B. senkrecht auf den Grenzflächen des Messobjektes und unterhalb des Grenzabstandes, wird dies von der Steuereinrichtung erkannt und angezeigt bzw. direkt die Hauptmessung durchgeführt.

Somit weist gemäß dieser bevorzugten Ausführungsform das Verfahren zur THz-Vermessung eines Messobjektes mindestens folgende Schritte auf:
- Phase einer Vormessung (I), in der ein erster THz-Sendestrahl eines THz-Transceivers eines THz-Messgeräts in einem ersten Frequenzbereich und mit einer ersten Bandbreite entlang einer optischen Achse auf das Messobjekt ausgestrahlt wird und von einer Grenzfläche des Messobjektes reflektierte THz-Strahlung detektiert wird (Schritt St3),
- Ermitteln, ob ein Messobjekt erfasst ist (Schritt St4),
- falls das Messobjekt erfasst ist, Ermitteln eines aktuellen Abstandes des THz-Messgeräts oder des THz-Transceivers von der Grenzfläche (Schritt St5),
- Vergleichen des ermittelten aktuellen Abstandes mit einem Grenzabstand (Schritt St6), und
- bei Unterschreiten des Grenzabstandes (Schritt St8) nachfolgend Einleiten einer Hauptmessung (II) oder Anzeigen einer Einleitung der Hauptmessung (II),
- Phase der Hauptmessung (II), in der ein zweiter THz-Sendestrahl mit einer zweiten Brandbreite, die größer als die erste Bandbreite ist, entlang der optischen Achse auf das Messobjekt eingestrahlt wird und reflektierte THz-Strahlung detektiert wird (Schritt St9),
wobei mit dem ausgesandten zweiten THz-Sendestrahl und der detektierten reflektierten THz-Strahlung eine Vermessung von geometrischen Eigenschaften oder Materialeigenschaften des Messobjektes erfolgt (Schritt St10),
- Ausgeben des Messergebnisses (Schritt St11).

Gemäß der bevorzugten Ausführungsform weist das Messgerät folgende Merkmale auf:
THz-Messgerät zur Vermessung eines Messobjektes,
wobei das THz-Messgerät aufweist:
   einen THz-Transceiver zum Aussenden von THz-Strahlung entlang einer optischen Achse und Empfang reflektierter THz-Strahlung,
   eine Steuereinrichtung zur Aufnahme von Messsignalen des THz-Transceivers und Ermitteln eines Abstandes und eines Messergebnisses des Messobjektes, und
   eine Ausgabeeinrichtung zur Ausgabe eines Messergebnisses,
   dadurch gekennzeichnet, dass
   das THz-Messgerät tragbar ist und einen Griffbereich zum Erfassen und
   Hantieren durch einen Benutzer aufweist,
   wobei die Steuereinrichtung ausgelegt ist,
   in einer Phase der Vormessung die THz-Messstrahlung als ersten THz-Sendestrahl entlang der optischen Achse mit einer ersten Bandbreite auszusenden und in einer Phase der Hauptmessung (II) als zweiten THz-Sendestrahl mit einer zweiten Bandbreite auszusenden, die größer als die erste Bandbreite ist, für eine höhere Auflösung,
   wobei die Steuereinrichtung in der Vormessung (I) ermittelt, ob ein Messobjekt erfasst und falls das Messobjekt erfasst ist, den Abstand des THz-Messgeräts oder des THz-Transceivers von einer Grenzfläche des Messobjektes ermittelt und mit einem Grenzabstand vergleicht und in Abhängigkeit des Vergleichs bei Unterschreiten des Grenzabstandes eine Hauptmessung (II) einleitet oder anzeigt,
   und wobei die Steuereinrichtung ausgelegt ist, in der Hauptmessung (II) Messeigenschaften des Messobjektes zu ermitteln.

In einer nicht beanspruchten Alternative zu dieser Ausführungsform mit einer Vormessung mit einer Vermessung mit einer kleineren Bandbreite kann die Vormessung jedoch auch durch einen weiteren Sensor erfolgen, z.B.
- eine Laser-Abstandssensor-Einrichtung, die den Abstand z.B. durch Triangulation ermittelt, oder auch
- einen Ultraschallsensor, der den Abstand mittels Ausgabe eines Ultraschall-Sendesignals und Aufnahme eines Ultraschal-Reflexionssignals ermittelt,
- oder auch einen Kontakt-Sensor, der z.B. etwas vorsteht und als Taster bei Kontakt mit dem Messobjekt eingedrückt wird.

Die Phase der Vormessung kann weiterhin noch unterteilt werden in
- eine Suchphase, bis das Messobjekt erfasst ist; in der Suchphase wird somit z.B. noch keine reflektierte THz-Strahlung detektiert, da der Abstand zu groß oder die Grenzflächen nicht senkrecht zur ausgesandten THZ-Strahlung liegen;
- eine Erfassungsphase, in der das Messobjekt erfasst ist, aber der Grenzabstand noch nicht erreicht ist und/oder der Winkel der optischen Achse noch nicht hinreichend senkrecht zu den Grenzflächen liegt.

In der Phase der Vormessung kann fortlaufend eine Messung erfolgen; in der Phase der Hauptmessung kann auch z. B. nur zeitweise eine Vermessung, z.B. eine Abstands- bzw. Schichtdickenmessung erfolgen.

Die Phasen und/oder Ergebnisse können dem Benutzer fortlaufend angezeigt werden, z. B. auf einer optischen Anzeigeeinrichtung oder auch akustisch. So kann der Benutzer z.B. das Messgerät an dessen Griffbereich ergreifen, auf das Messobjekt ausrichten und durch Drücken einer Betätigungseinrichtung die Phase der Vormessung starten. Hierbei kann ihm z.B. zunächst die Suchphase angezeigt werden, so dass er weiß, dass das Messgerät noch nicht richtig gehalten wird bzw. nicht genau oder zu weit positioniert wird. Wenn die Erfassungsphase angezeigt wird, wird der Benutzer somit das Messgerät noch genauer oder näher positionieren, bis die Messphase angezeigt wird und/oder bereits beginnt.

So kann der Benutzer z. B. bei einem tragbaren Messgerät mit einer geeigneten Anlagefläche an dem Messobjekt entlang fahren und fortlaufend Messungen durchführen; falls er das tragbare Messgerät zeitweise ungenau hält oder von der Oberfläche abkommt, z. B. durch Kippen des Messgerätes, da er beim Entlangfahren an der runden Oberfläche eventuell nicht genau der Oberflächenkontur folgt, wird dies dem Benutzer sofort angezeigt, z. B. durch eine rote Anzeige für die Phase der Vormessung. Der Nutzer kann dann das Messgerät wieder genauer positionieren und die Hauptmessung fortsetzen.

Hierbei kann das tragbare Messgerät insbesondere an seinem vorderen Endbereich eine Anlagekontur aufweisen, vorteilhafterweise an einer Streublende. Somit hält die Streublende zum einen störende THz-Strahlung von dem THz-Transceiver fern, und dient weiterhin mit Konturlinien auch zur genauen Positionierung an dem Messobjekt. Hierbei können z. B. Paare von Konturlinien vorliegen, die geeignete Positionierungen an Messobjekten mit definierten Krümmungen, wie Kunststoffrohren mit definierten Durchmessern ermöglichen. Somit können mehrere Paare von Konturlinien an der Vorderseite der Formblende zur genauen Anlage dienen; sobald der Benutzer das tragbare Messgerät verkippt, wird es dem Benutzer als Phase der Vormessung angezeigt, da der reflektierte THz-Strahl nicht zurückgelangt bzw. der Abstand zu groß wird.

Somit sind auch mit einem tragbaren Messgerät einfache Handhabung durch den Benutzer und genaue Messungen, insbesondere auch sehr genaue Schichtdickenmessungen ohne großen Aufwand möglich.

Die Erfindung wird im Folgenden anhand der beiliegenden Zeichnungen an einigen Ausführungsformen näher erläutert. Es zeigen:
- Fig. 1: eine perspektivische Ansicht einer Messanordnung mit einem tragbaren THz-Messgerät in der Phase der Vormessung;
- Fig. 2: eine Messanordnung mit einem tragbaren THz-Messgerät in der Phase der Hauptmessung;
- Fig. 3: ein Blockschaltbild der Messanordnung, und
- Fig. 4: ein Flussdiagramm des THz-Messverfahrens gemäß einer Ausführungsform.

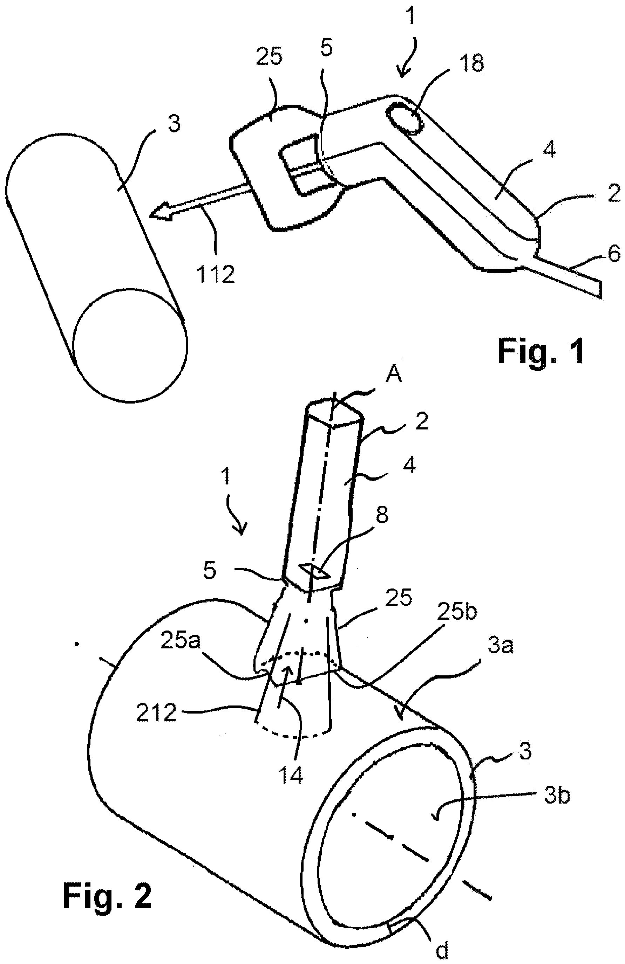

Eine THz-Messanordnung 1 weist gemäß den Ausführungsformen der Fig. 1 und 2 jeweils ein tragbares THz-Messgerät 2 zum Vermessen eines Messobjektes 3, z. B. eines Kunststoffrohres auf. Das tragbares THz-Messgerät 2 ist in Fig. 1 und 2 beispielhaft in unterschiedlichen Ausbildungen gezeigt.

Das tragbare THz-Messgerät 2 weist jeweils einen Griffbereich 4 zum Ergreifen und Hantieren durch den Benutzer und einen vorderen Endbereich 5 auf, der vorzugsweise ein Anlagebereich mit einer Formblende 25 ist. Das tragbare THz-Messgerät 2 kann gemäß Fig. 1 z. B. abgewinkelt, oder gemäß der Ausführungsform der Fig. 2 auch länglich oder stabförmig ausgebildet sein. Weiterhin kann das tragbare THz-Messgerät 2 gemäß der Ausführungsform der Fig. 2 vollständig tragbar sein, ohne Datenverbindung zu einer stationären Einheit, oder gemäß Fig. 1 über eine Daten- und Stromversorgungsleitung 6 an eine stationäre Einrichtung angeschlossen sein. Auch kann z.B. eine tragbare Einheit, wie sie in Fig. 2 dargestellt ist, z. B. drahtlos Daten an eine stationäre Einheit übertragen.

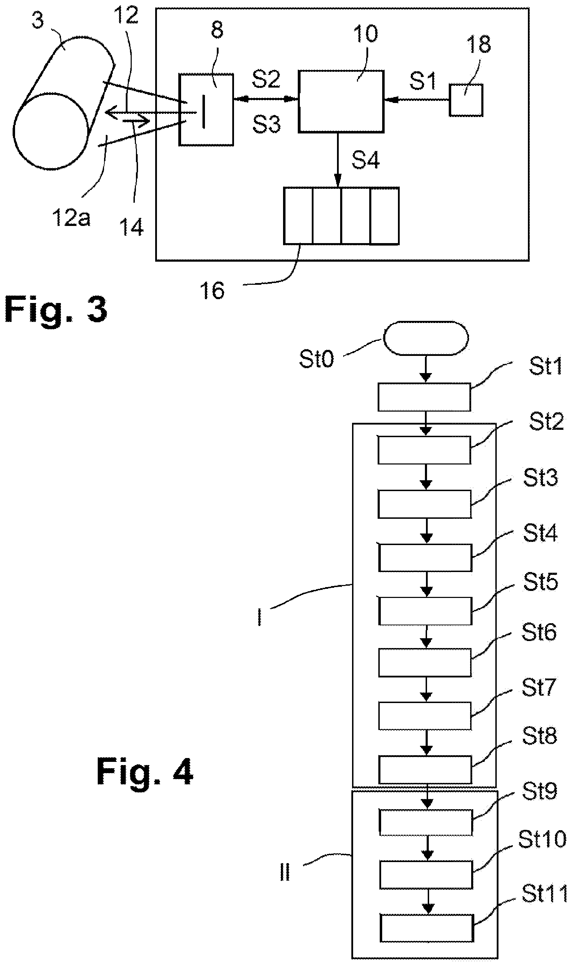

Gemäß dem Blockschaltbild der Fig. 3 weist das tragbare THz-Messgerät 2 eine Sende- und Empfangseinrichtung 8, d.h. einen Sende- und Empfangsdipol bzw. Transceiver 8 auf, der vorzugsweise vollelektronisch, d. h. als Sende- und Empfangsdipol ausgebildet ist und von einer elektronischen Steuereinheit 10 angesteuert wird. Die Sende- und Empfangseinrichtung 8 gibt einen elektromagnetischen Strahl 12, nachfolgend THz-Sendestrahl 12 genannt, in einem Ausstrahlkegel 12a entlang einer optischen Achse A aus, insbesondere im Frequenzbereich von 0,01 bis 10 THz, d.h. 10 GHz bis 10 THz, insbesondere als gepulste THz-Strahlung oder in Frequenzmodulation. Wenn sie unter einem orthogonalen Winkel auf eine Außenfläche 3a und Innenfläche 3b d des Messobjektes 3 trifft, wird THz-Strahlung 14 entlang der optischen Achse A zur Sende- und Empfangseinrichtung 8 zurück reflektiert und dort detektiert. Somit kann eine Laufzeit der THz-Strahlung von der Sende- und Empfangseinrichtung zur Grenzfläche 3a und zurück detektiert werden, was direkt oder bei Frequenzmodulation auch im Frequenzraum (mittels Fourier-Transformation) entsprechend ermittelt und umgerechnet werden kann. Somit kann aus der THz-Messung der Sende- und Empfangseinrichtung 8 durch die elektronische Steuereinrichtung 10 ein Abstand d der Sende- und Empfangseinrichtung 8 zur Grenzfläche 3a ermittelt werden.

In einer Vormessung I sendet der THz-Transceiver 8 einen ersten THz-Sendestrahl 112 entlang der optischen Achse A aus, der in einem schmalen Frequenzband fb1 mit einer Bandbreite b1 von z. B. 1 GHz ausgebildet ist. In dieser Vormessung I kann insbesondere in einer Suchphase la zunächst ermittelt werden, ob in der Messung überhaupt ein Messobjekt 3 bzw. eine im wesentlichen orthogonale Grenzfläche 3a des Messobjektes 3 mit der Messung erfasst werden kann und nachfolgend in einer Ermittlungsphase Ib, ob der aktuelle Messabstand d unterhalb eines Grenzabstandes d_tres liegt oder nicht. Falls d < d_tres, so wird erkannt, dass ein zulässiger Abstand für eine nachfolgende Hauptmessung II vorliegt, und direkt die Hauptmessung II eingeleitet oder wiederum ein Anzeigesignal ausgegeben, dass nachfolgend die Hauptmessung durchgeführt werden kann.

In der Hauptmessung II wird ein THz-Sendestrahl 212 in einem zweiten, breiteren Frequenzband fb2, z. B. mit Bandbreite b2 von z.B. 20, 30 oder 40 oder auch 1000 GHz, ausgesandt, da der ausgesandte THz-Strahl 212 das Messobjekt 3 trifft und somit durch das Material des Messobjektes 3 gedämpft bzw. abgeschwächt wird, insbesondere durch Reflexionen und ggf. auch Absorption. In der Hauptmessung wird dann z.B. eine Schichtdicke d3 als Abstand zwischen der Außenfläche 3a und der Innenfläche 3b des Messobjektes 3 ermittelt; entsprechend können auch weitere Schichtdicken ermittelt werden, insbesondere bei mehrschichtigen Rohren. Weiterhin oder alternativ hierzu können auch andere geometrische Abstände oder Strukturen gemessen werden; weiterhin oder alternativ hierzu können auch spektroskopische Vermessungen durchgeführt werden, bei denen somit z.B. das Absorptionsverhalten des Messobjektes 3, z.B. in räumlicher Auflösung, untersucht wird.

Die elektronische Steuereinheit 10 kann vorteilhafterweise Ausgabesignale S2 an eine Ausgabeeinrichtung 16 ausgeben, wobei die Ausgabeeinrichtung 16 z. B. eine optische oder auch akustische Anzeigeeinrichtung sein kann und die unterschiedlichen Phasen Ia, Ib, II bzw. Zustände anzeigt. Dies kann z.B. in drei unterschiedlichen Anzeigefeldern oder durch unterschiedliche Anzeigen auf einem gemeinsamen Anzeigefeld angezeigt werden.

Weiterhin werden vorzugsweise die Ergebnisse ausgewertet und mit Soll-Werten verglichen, so dass an dem tragbaren Messgerät 2 bzw. dessen Ausgabeeinrichtung 16 auch qualitativ angezeigt wird, ob z. B. eine zu geringe Schichtdicke ermittelt worden ist bzw. es wird allgemein das Messergebnis an der Ausgabeeinrichtung 16 angezeigt. Bei spektroskopischen Untersuchungen kann z.B. angezeigt werden, ob spezifische Substanzen, z.B. spezifische chemische Verbindungen, detektiert worden sind.

Der Grenzabstand d_tres kann insbesondere auf die Länge einer Formblende 25 des vorderen Endbereichs 5 abgestimmt sein; so kann die Formblende 25 z. B. zwei Anlage-Konturlinien 25a, 25b aufweisen, die bei ordnungsgemäßer Lage zur Anlage an der Oberfläche 3a des Messobjektes 3 kommen. Wenn in der Phase der Vormessung I ein hinreichendes Messsignal ermittelt wird, d.h. die Amplitude des Messsignals einen Grenzwert übersteigt, und somit eine senkrechte Messposition vorliegt, und weiterhin der ermittelte Abstand d unterhalb des Grenzabstandes d_tres liegt, kann eine korrekte Anlage auch ohne Berührungssensoren usw., d.h. alleine durch die Abstandsmessung ermittelt werden, so dass nachfolgend die Phase der Hauptmessung II eingeleitet wird.

In der Phase der Vormessung I kann insbesondere eine Messung innerhalb eines Normbereichs bzw. eines zugeteilten Messbandes für eine derartige THz-Abstandsmessung erfolgen, d. h. insbesondere innerhalb eines ISM-Bandes (Industrial Scientific and Medical), in dem eine Vermessung auch ohne Abschirmung oder Dämpfung zugelassen ist, z.B. bei 24 GHz bis 24,25 GHz oder 122 bis 123 GHz oder 244 bis 126 GHz.

Somit wird durch das tragbare Messgerät 2 in der Phase der Vormessung I z. B. ein ISM-Band eingehalten, woraufhin dann in der Phase der Hauptmessung II eine höhere Bandbreite, für eine höhere Auflösung bzw. zum Beispiel eine genauere Erfassung der Schichtdicke oder eine genaue spektroskopische Untersuchung eingestellt wird.

An dem THz-Messgerät 2, z. B. im Griffbereich 4, kann eine Betätigungseinrichtung 18 z. B. als Druckknopf oder Schalter vorgesehen sein, mit der der Benutzer somit die Messung einleitet. Fig. 4 zeigt beispielhaft ein Messverfahren gemäß einer Ausführungsform der Erfindung:
Nach dem Start in Schritt St0 ergreift der Benutzer in Schritt St1 den Griffbereich 4 und führt das Messgerät 2 in Richtung zu dem Messobjekt 3.

Zur Einleitung der Phase der Vormessung I betätigt der Benutzer somit in Schritt St2 die Betätigungseinrichtung 18 und gibt ein Betätigungssignal S1 bzw. Einschaltsignal,
so dass die Steuereinrichtung 10 nachfolgend in Schritt St3 Ansteuersignale S2 an den THz-Transceiver 8 ausgibt und zunächst eine Vormessung I, insbesondere eine Suchphase Ia startet mit dem ersten THz- Sendestrahl 112 mit kleinerer Bandbreite b1, wobei der THz-Transceiver 8 Messsignale S3 erzeugt.

Die Steuereinrichtung 10 nimmt die Messsignale S3 auf und ermittelt,
- in Schritt St4, ob bereits ein Messobjekt 3 erfasst ist (Suchphase Ia)
- in Schritt St5, falls bereits das Messobjekt 3 bzw. dessen Grenzfläche 3a erfasst ist, den aktuellen Abstand d und
- in Schritt St6, ob der aktuelle Abstand d oberhalb des Grenzabstandes d_tres liegt (Erfassungsphase Ib).
und zeigt die ermittelte Phase durch Anzeigesignale S3 an einer Anzeigeeinrichtung 16 an. Hierbei kann auch z.B. das Messsignal auf einer Skala für den Messabstand d angezeigt werden.

Der Benutzer weiß somit, dass er gegebenenfalls das Messgerät 2 näher an dem Messobjekt 3 positionieren muss oder z.B. das Messgerät 2 verkantet. Der Benutzer führt somit in Schritt St7 das tragbare THz-Messerät 2 hinreichend nahe und ordnungsgemäß an das Messobjekt 3, z. B. bis zu einem vollständigen Kontakt der Formblende 25 bzw. der Konturlinien 25a, 25b an der Außenfläche 3a,
so dass in Schritt St8 die Steuereinrichtung 10 erkennt, dass der aktuelle Abstand d unterhalb des Grenzabstandes d_tres liegt und
in Schritt St9 direkt die Hauptmessung II beginnt, oder dem Benutzer angezeigt wird, dass er über die Betätigungseinrichtung 18 nachfolgend eine Hauptmessung II einleiten kann.

In der Hauptmessung II erfolgt in Schritt St10 durch den zweiten THz-Sendestrahl 212 mit größerer Bandbreite eine genauere Untersuchung, z.B. eine genaue Ermittlung der Schichtdicke d3 oder einer anderen geometrischen Eigenschaft oder z.B. eine genaue spektroskopische Untersuchung, die in Schritt St11 ausgegeben wird, z.B. auf der Anzeigeeinrichtung 16.

Neben Messungen von Schichtdicken bzw. Wanddicken können weiterhin allgemein Strukturuntersuchungen bzw. Untersuchungen des geometrischen Aufbaus erfolgen, sowie spektroskopische Untersuchungen, bei denen z.B. chemische Substanzen aufgrund ihres spektroskopischen Absorptionsverhaltens erfasst werden.

### Bezugszeichenliste

- 1: THz-Messanordnung
- 2: tragbares THz-Messgerät
- 3: Messobjekt, z.B. Kunststoffrohr
- 3a: Außenfläche des Messobjektes 3
- 3b: Innenfläche des Messobjektes 3
- 4: Griffbereich
- 5: vorderer Endbereich, vorzugsweise Anlagebereich
- 8: THz-Transceiver, z.B. Sende- und Empfangsdipol
- 10: elektronische Steuereinrichtung
- 12: THz-Sendestrahl
- 12a: Ausstrahlkegel

- 112: erster THz-Sendestrahl der Vormessung
- 212: zweiter THz-Sendestrahl der Hauptmessung, d.h. Hauptmessungs-Sendestrahl

- 14: reflektierte THz-Strahlung

- 16: Ausgabeeinrichtung
- 18: Betätigungseinrichtung
- 25: Formblende des vorderen Endbereichs 5
- 25a, 25b: Anlage-Konturlinien

- A: optische Achse

- b1: erste, kleinere Bandbreite von z. B. 1 GHz, schmaleres erstes Frequenzband, der Vormessung

- b2: zweite, größere Bandbreite z. B. 20, 30 oder 40 GHz, breiteres zweites Frequenzband, der Hauptmessung

- d: Abstand des THz-Transceivers 8 zur Grenzfläche 3a
- d_tres: Grenzabstand
- d3: Schichtdicke
- e1: erste Anzeige, z.B. für Suchphase Ia
- e2: zweite Anzeige, z.B. für Erfassungsphase Ib

- I: Phase der Vormessung
- Ia: Suchphase zum Erfassen des Messobjektes 3
- Ib: Erfassungsphase
- II: Phase der Hauptmessung

- S1: Betätigungssignal
- S2: Ansteuersignal
- S3: Messsignal
- S4: Ausgabesignale an Ausgabeeinrichtung 16
- St1 bis St11: Schritte des Verfahrens

## Patentansprüche

1. Verfahren zur THz-Vermessung eines Messobjektes (3),
mit mindestens folgenden Schritten:
- Phase einer Vormessung (I) (St3),
- Ermitteln, ob ein Messobjekt (3) erfasst ist (St4),
- falls das Messobjekt (3) erfasst ist, Ermitteln eines aktuellen Abstandes (d) eines THz-Messgeräts (2) oder eines THz-Transceivers (8) von einer Grenzfläche (3a) des Messobjektes (St5),
- Vergleichen des ermittelten aktuellen Abstandes (d) mit einem Grenzabstand (d_tres) (St6), und
- bei Unterschreiten des Grenzabstandes (d_tres) (St8) nachfolgend Einleiten einer Hauptmessung (II) oder Anzeigen einer Einleitung der Hauptmessung (II),
- Phase der Hauptmessung (II), in der ein Hauptmessungs-THz-Sendestrahl (212) mit einer Hauptmessungs-Brandbreite (b2) entlang einer optischen Achse (A) auf das Messobjekt (3) eingestrahlt wird und reflektierte THz-Strahlung (14) detektiert wird (St9),
wobei mit dem ausgesandten Hauptmessungs-THz-Sendestrahl (212) und der detektierten reflektierten THz-Strahlung (14) eine Vermessung von geometrischen Eigenschaften oder Materialeigenschaften des Messobjektes (3) erfolgt (St10),
- Ausgeben des Messergebnisses (St11),
**dadurch gekennzeichnet, dass**
in der Phase der Vormessung (I) ein erster THz-Sendestrahl (112) des THz-Transceivers (8) des THz-Messgeräts (2) in einem ersten Frequenzbereich (fb1) und mit einer ersten Bandbreite (b1) entlang der optischen Achse (A) auf das Messobjekt (3) ausgestrahlt wird und von der Grenzfläche (3a) des Messobjektes (3) reflektierte THz-Strahlung (14) detektiert wird (St3), und
in der Phase der Hauptmessung (II) der Hauptmessungs-Sendestrahl (212) als zweiter Sendestrahl (212) eingestrahlt wird,
wobei die Hauptmessungs-Brandbreite (b2) des Hauptmessungs-Sendestrahls (212) größer als die erste Bandbreite (b1) ist,
wobei die THz-Strahlung (12, 112, 212) im Frequenzbereich von 0,01 bis 10 THz liegt.

2. Verfahren nach Anspruch 1, **dadurch gekennzeichnet, dass** das Messgerät (2) tragbar ist und an einem Griffbereich (4) gehalten und geführt wird, wobei es mit seinem vorderen Endbereich (5) vor oder an dem Messobjekt (3) positioniert wird (St1, St7).

3. Verfahren nach Anspruch 2, **dadurch gekennzeichnet, dass** das tragbare THz-Messgerät (2) von dem Benutzer mit einer an dem vorderen Endbereich (5) ausgebildeten Anlage, vorzugsweise einer Formblende (25), an eine Grenzfläche (3a) des Messobjektes (3) gelegt wird zum Unterschreiten des Grenzabstandes (d_tres).

4. Verfahren nach einem der vorherigen Ansprüche, **dadurch gekennzeichnet, dass** in der Phase der Hauptmessung (II) bei der Vermessung des Messobjektes (3) mit dem Hauptmessungs-THz-Sendestrahl (212) eine Schichtdicke (d3) zwischen Grenzflächen (3a, 3b) des Messobjektes (3) ermittelt wird.

5. Verfahren nach einem der vorherigen Ansprüche, **dadurch gekennzeichnet, dass** in der Phase der Hauptmessung (II) bei der Vermessung des Messobjektes (3) mit dem Hauptmessungs-THz-Sendestrahl (212) eine Materialanalyse des Messobjektes (3), insbesondere eine spektroskopische Analyse, z.B. eine räumlich aufgelöste spektroskopische Analyse des Messobjektes (3) erfolgt.

6. Verfahren nach einem der vorherigen Ansprüche, **dadurch gekennzeichnet, dass** bei der Ermittlung, dass der Grenzabstand (d_tres) unterschritten ist, selbsttätig die Phase der Hauptmessung (II) eingeleitet wird (St9).

7. Verfahren nach einem der vorherigen Ansprüche, **dadurch gekennzeichnet, dass** in der Phase der Vormessung (I) der THz-Sendestrahl (112) fortlaufend ausgesendet wird zur fortlaufenden Erfassung von Messobjekten und Vergleich eines aktuellen Messabstandes (d) mit dem Grenzabstand (d_tres).

8. Verfahren nach einem der vorherigen Ansprüche, **dadurch gekennzeichnet, dass** in der Phase der Hauptmessung (II) ein anderer Frequenzbereich als in der Phase der Vormessung (i) ausgesendet wird.

9. Verfahren nach einem der vorherigen Ansprüche, **dadurch gekennzeichnet, dass** in der Phase der Hauptmessung (II) eine andere Intensität als in der Phase der Vormessung (i) ausgesendet wird.

10. THz-Messgerät (2) zur Vermessung eines Messobjektes (3),
wobei das THz-Messgerät (2) aufweist:
einen THz-Transceiver (8) zum Aussenden von THz-Strahlung (12) entlang einer optischen Achse (A) und Empfang reflektierter THz-Strahlung (14),
eine Steuereinrichtung (10) zur Aufnahme von Messsignalen (1) des THz-Transceivers (8) und Ermitteln eines Abstandes (d) und eines Messergebnisses (d3) des Messobjektes (3), und
eine Ausgabeeinrichtung (16) zur Ausgabe eines Messergebnisses,
**dadurch gekennzeichnet, dass**
das THz-Messgerät (8) tragbar ist und einen Griffbereich (4) zum Erfassen und Hantieren durch einen Benutzer aufweist,
wobei die Steuereinrichtung (10) ausgelegt ist für eine Phase der Vormessung (I) und eine Phase der Hauptmessung (II),
wobei die Steuereinrichtung (10) ausgelegt ist, in der Phase der Hauptmessung (II) einen Hauptmessungs-THz-Sendestrahl (212) mit einer Hauptmessungs-Bandbreite (b2) entlang der optischen Achse (A) auszusenden,
wobei die Steuereinrichtung (10) in der Vormessung (I) ermittelt, ob ein Messobjekt erfasst und falls das Messobjekt erfasst ist, den Abstand (d) des THz-Messgeräts (2) oder des THz-Transceivers (8) von einer Grenzfläche (3a) des Messobjektes (3) ermittelt und mit einem Grenzabstand (d_tres) vergleicht und in Abhängigkeit des Vergleichs bei Unterschreiten des Grenzabstandes (d_tres) die Hauptmessung (II) einleitet oder anzeigt,
und wobei die Steuereinrichtung (10) ausgelegt ist, in der Hauptmessung (II) Messeigenschaften des Messobjektes zu ermitteln,
**dadurch gekennzeichnet, dass**
das THz-Messgerät (2) ausgelegt ist, in der Phase der Vormessung (I) die THz-Strahlung (12) als ersten THz-Sendestrahl (112) entlang der optischen Achse (A) mit einer ersten Bandbreite (b1) auszusenden,
und in der Phase der Hauptmessung (II) den Hauptmessungs-THZ-Sendestrahl (212) als zweiten THz-Sendestrahl (212) mit der Hauptmessungs-Bandbreite (b2) entlang der optischen Achse (A) auszusenden,
wobei die Hauptmessungs-Bandbreite (b2) größer als die erste Bandbreite (b1) ist, für eine höhere Auflösung.

11. THz-Messgerät (2) nach Anspruch 10, **dadurch gekennzeichnet, dass** die Steuereinrichtung (10) ausgelegt ist, in der Hauptmessung (II) geometrische Eigenschaften und/oder Materialeigenschaften des Messobjektes, z.B. die Schichtdicke (d3) als Abstand zwischen zwei Grenzflächen (3a, 3b) und/oder Materialeigenschaften durch spektroskopische Analyse, zu ermitteln.

12. THz-Messgerät (2) nach einem der Ansprüche 10 bis 11, **dadurch gekennzeichnet, dass** es an seinem vorderen Endbereich (5) eine Formblende (25) aufweist mit Konturlinien (25a, 25b), insbesondere Paaren von bogenförmigen Konturlinien, zur Anlage an der Außenfläche (3a) des Messobjektes, insbesondere eines Rohres (3), wobei bei Anlage der Konturlinien (25a, 25b) an der Außenfläche (3a) des Messobjektes (3) der aktuelle Abstand (d) den Grenzabstand (d_tres) unterschreitet.

13. THz-Messgerät (2) nach einem der Ansprüche 10 bis 12, **dadurch gekennzeichnet, dass** der THz-Transceiver (8) vollelektronisch, insbesondere als Sende- und Empfangsdipol ausgebildet ist, z. B. mit Frequenzmodulation oder gepulster Strahlung,
wobei in der Hauptmessung (II) mit der größeren Hauptmessungs-Bandbreite (b2) eine höhere Auflösung des Messergebnis zur genauen Ermittlung der Messeigenschaften des Messobjektes, z.B. einer Schichtdicke (d3) oder spektroskopischen Analyse, ausbildbar ist.

## Claims

1. Method for THz measuring a measurement object (3),
comprising at least the following steps:
- phase of a pre-measurement (I) (St3),
- determining whether a measurement object (3) has been detected (St4),
- if the measurement object (3) has been detected, determining a current distance (d) of a THz measuring device (2) or a THz transceiver (8) from a boundary surface (3a) of the measurement object (St5),
- comparing the determined current distance (d) with a distance limit (d_tres) (St6), and
- if the distance limit (d_tres) has not been exceeded (St8), subsequently initiating a main measurement (II) or indicating the initiation of the main measurement (II),
- phase of the main measurement (II) in which a main measurement THz transmission beam (212) having a main measurement bandwidth (b2) is emitted along an optical axis (A) towards the measurement object (3) and reflected THz radiation (14) is detected (St9), whereby, using the emitted main measurement THz transmission beam (212) and the detected reflected THz radiation (14), a measurement of geometric characteristics or material characteristics of the measurement object (3) is carried out (St10),
- putting out the measurement result (St11),
**characterised in that**
in the phase of pre-measurement (I) a first THz transmission beam (112) of the THz transceiver (8) of the THz measuring device (2) is emitted, in a first frequency range (fb1) and having a first bandwidth (b1), along the optical axis (A) towards the measurement object (3) and THz radiation reflected off of the boundary surface (3a) of the measurement object (3) is detected (St3), and
in the phase of main measurement (II) the main measurement transmission beam (212) is emitted as second transmission beam (212),
whereby the main measurement bandwidth (b2) of the main measurement transmission beam (212) is larger than the first bandwidth (b1),
where the THz radiation (12, 112, 212) lies in a frequency range between 0.01 and 10 THz.

2. Method according to claim 1, **characterised in that** the measuring device (2) is portable and held and handled by a grip region (4), whereby it is being positioned such that the front end region (5) is in front of or on the measurement object (3) (St1, St7).

3. Method according to claim 2, **characterised in that** said portable THz measuring device (2) is placed by the user by a contact surface formed at the front end region (5), preferably a shaped panel (25), against a boundary surface (3a) of the measurement object (3) so as to not exceed the distance limit (d_tres).

4. Method according to one of the above claims, **characterised in that** in the phase of main measurement (II), when measuring the measurement object (3) using the main measurement THz transmission beam (212), a layer thickness (d3) between boundary surfaces (3a, 3b) of the measurement object (3) is determined.

5. Method according to one of the above claims, **characterised in that** in the phase of main measurement (II), when measuring the measurement object (3) using the main measurement THz transmission beam (212), a material analysis of the measurement object (3) is carried out, in particular a spectroscopic analysis, e.g. a spatially resolved spectroscopic analysis of the measurement object (3).

6. Method according to one of the above claims, **characterised in that** the phase of main measurement (II) is initiated automatically upon determination that the distance limit (d_tres) has not been exceeded (St9).

7. Method according to one of the above claims, **characterised in that** in the phase of pre-measurement (I) the THz transmission beam (112) is emitted continuously for continuous detection of measuring objects and comparison of a current measuring distance (d) to the distance limit (d_tres).

8. Method according to one of the above claims, **characterised in that** in the phase of main measurement (II) another frequency range is emitted than the one in the phase of pre-measurement (i).

9. Method according to one of the above claims, **characterised in that** in the phase of main measurement (II) another intensity is emitted than the one in the phase of pre-measurement (i).

10. THz measuring device (2) for measuring a measurement object (3), said THz measuring device (2) comprising:
a THz transceiver (8) for emitting THz radiation (12) along an optical axis (A) and receiving reflected THz radiation (14),
a controller device (10) for collecting measurement signals (1) of the THz transceiver (8) and determining a distance (d) and a measurement result (d3) of the measurement object (3), and
an output device (16) for putting out a measurement result,
**characterised in that**
said THz measuring device (8) is portable and comprises a grip region (4) for being grabbed and handled by a user,
said controller device (10) being configured for a phase of pre-measurement (I) and a phase of main measurement (II),
said controller device (10) being configured to emit, in the phase of main measurement (II), a main measurement THz transmission beam (212) having a main measurement bandwidth (b2) along the optical axis (A),
said controller device (10) determining in the pre-measurement (I) whether a measurement object has been detected and, if the measurement object has been detected, determining the distance (d) of the THz measuring devices (2) or the THz transceiver (8) from a boundary surface (3a) of the measurement object (3) and comparing the same with a distance limit (d_tres) and, depending on the comparison, initiates or indicates the main measurement (II) when the distance limit (d_tres) has not been exceeded,
and said controller device (10) being configured to determine measurement characteristics of the measurement object in the main measurement (II),
**characterised in that**
said measuring device (2) is configured to emit, in the phase of pre-measurement (I), the THz radiation (12) as a first THz transmission beam (112) along the optical axis (A) with a first bandwidth (b1),
and to emit, in the phase of main measurement (II), the main measurement THz transmission beam (212) as a second THz transmission beam (212) with the main measurement bandwidth (b2) along the optical axis (A),
the main measurement bandwidth (b2) being larger than the first bandwidth (b1), for a higher resolution.

11. THz measuring device (2) according to claim 10, **characterised in that** the controller device (10) is configured to determine, in the main measurement (II), geometric characteristics and/or material characteristics of the measurement object, e.g. the layer thickness (d3) as the distance between two boundary surfaces (3a, 3b) and/or material characteristics by means of spectroscopic analysis.

12. THz measuring device (2) according one of the claims 10 or 11, **characterised in that** it comprises a shaped panel (25) at its front end region (5) having contour lines (25a, 25b), in particular pairs or arc-shaped contour lines, for being placed in contact with the exterior surface (3a) of the measurement object, in particular a pipe (3), whereby, when the contour lines (25a, 25b) are in contact with the exterior surface (3a) of the measurement object (3), the current distance (d) is below the distance limit (d_tres).

13. THz measuring device (2) according to one of the claims 10 through 12, **characterised in that** THz transceiver (8) is designed to be fully electronic, in particular as a transmitter and receiver dipole, e.g. using frequency modulation or pulsed radiation,
where, in main measurement (II) using the wider main measurement bandwidth (b2), a higher resolution of the measurement result can be generated so as to make a more precise determination of measured characteristics of the measurement object, e.g. a layer thickness (d3) or spectroscopic analysis.

## Revendications

1. Procédé de mesure THz d'un objet à mesurer (3),
ledit procédé comportant au moins les étapes suivantes :
- une phase de mesure préliminaire (I) (St3),
- la détermination de si un objet à mesurer (3) a été détecté (St4),
- si l'objet à mesurer (3) a été détecté, la détermination d'une distance actuelle (d) d'un appareil de mesure THz (2) ou d'un émetteur-récepteur THz (8) par rapport à une surface limite (3a) de l'objet à mesurer,
- la comparaison de la distance actuelle déterminée (d) avec une distance limite (d_tres) (St6) et
- si la distance limite (d_tres) n'est pas atteinte (St8), l'initiation ensuite d'une mesure principale (II) ou l'affichage de l'initiation de la mesure principale (II),
- une phase de mesure principale (II), dans laquelle un faisceau d'émission THz de mesure principale (212) avec une largeur de bande de mesure principale (b2) est projeté le long d'un axe optique (A) sur l'objet à mesurer (3) et un rayonnement THz réfléchi (14) est détecté (St9),
une mesure de propriétés géométriques ou de matériau de l'objet à mesurer (3) ayant lieu (St10) au moyen du faisceau d'émission THz de mesure principale émis (212) et du rayonnement THz réfléchi (14) détecté,
- la fourniture du résultat de mesure (St11),
**caractérisé en ce que**
au cours de la phase de mesure préliminaire (I), un premier faisceau d'émission THz (112) de l'émetteur-récepteur THz (8) de l'appareil de mesure THz (2) est projeté sur l'objet à mesurer (3) dans une première plage de fréquences (fb1) et avec une première largeur de bande (b1) le long de l'axe optique (A) et détecté par le rayonnement THz (14) réfléchi par la surface limite (3a) de l'objet à mesurer (3) (St3), et
au cours de la phase de la mesure principale (II), le faisceau d'émission de mesure principale (212) est projeté comme second faisceau d'émission (212), la largeur de bande de mesure principale (b2) du faisceau d'émission de mesure principale (212) étant supérieure à la première largeur de bande (b1), le rayonnement THz (12, 112, 212) étant situé dans la plage de fréquence de 0,01 à 10 THz.

2. Procédé suivant la revendication 1, **caractérisé en ce que** l'appareil de mesure (2) est portable et peut être maintenu et guidé au niveau d'une zone de préhension (4), l'appareil de mesure étant positionné, avec sa zone d'extrémité avant (5), devant ou sur l'objet à mesurer (3) (St1, St7).

3. Procédé suivant la revendication 1, **caractérisé en ce que** l'appareil de mesure THz portable (2) est appliqué par l'utilisateur grâce à un appui formé sur la zone d'extrémité avant (5), de préférence une pièce moulée formant écran (25), contre une surface limite (3a) de l'objet à mesurer (3) pour descendre en-dessous de la distance limite.

4. Procédé suivant une des revendications précédentes, **caractérisé en ce qu'**au cours de la phase de la mesure principale (II), lors de la mesure de l'objet à mesurer (3) au moyen du faisceau d'émission THz de mesure principale (212), une épaisseur de couche (d3) est déterminée entre des surfaces limites (3a, 3b) de l'objet mesuré.

5. Procédé suivant une des revendications précédentes, **caractérisé en ce qu'**au cours de la phase de la mesure principale (II), lors de la mesure de l'objet à mesurer (3) au moyen du faisceau d'émission THz de mesure principale (212), a lieu une analyse de matériau de l'objet mesuré (3), notamment une analyse spectroscopique, par exemple, une analyse spectroscopique à résolution spatiale de l'objet mesuré (3).

6. Procédé suivant une des revendications précédentes, **caractérisé en ce que,** lors de la détermination que la distance limite (d_tres) n'est pas atteinte, la phase de mesure principale (II) est automatiquement initiée (St9).

7. Procédé suivant une des revendications précédentes, **caractérisé en ce qu'**au cours de la phase de la mesure préliminaire (I), le faisceau d'émission THz (112) est continuellement émis pour une capture continue d'objets à mesurer et une comparaison d'une distance de mesure (d) actuelle avec la distance limite (d_tres).

8. Procédé suivant une des revendications précédentes, **caractérisé en ce qu'**au cours de la phase de la mesure principale (II) est émise une autre plage de fréquences que celle au cours de la phase de mesure préliminaire (i).

9. Procédé suivant une des revendications précédentes, **caractérisé en ce qu'**au cours de la phase de la mesure principale (II) est émise une autre intensité que celle au cours de la phase de mesure préliminaire (i).

10. Appareil de mesure THz (2) destiné à la mesure d'un objet à mesurer (3), l'appareil de mesure THz (2) présentant :
un émetteur-récepteur THz (8) pour émettre un rayonnement THz (12) le long d'un axe optique (A) et recevoir un rayonnement THz réfléchi (14),
un dispositif de commande (10) pour enregistrer des signaux de mesure (1) de l'émetteur-récepteur THz (8) et déterminer une distance (d) et un résultat de mesure (d3) de l'objet mesuré (3), et
un dispositif de sortie (16) pour la sortie d'un résultat de mesure,
**caractérisé en ce que**
l'appareil de mesure THz (8) est portable et présente une zone de préhension (4) permettant à l'utilisateur de le saisir et manipuler,
le dispositif de commande (10) étant conçu pour une phase de mesure préliminaire (I) et une phase de mesure principale (II) ,
le dispositif de commande (10) étant conçu pour émettre au cours de la phase de mesure principale un faisceau d'émission THz de mesure principale (212) avec une largeur de bande principale (b2) le long de l'axe optique (A),
le dispositif de commande (10) déterminant au cours de la mesure préliminaire (I) si un objet à mesurer a été capturé et au cas où l'objet à mesurer est capturé, ledit dispositif de commande détermine la distance (d) de l'appareil de mesure THz (2) ou de l'émetteur-récepteur THz (8) par rapport à une surface limite (3a) de l'objet à mesurer (3) et la compare avec un distance limite (d_tres) et initie ou affiche la mesure principale (II) en fonction de la comparaison si la distance limite (d_tres) n'est pas atteinte, et
le dispositif de commande (10) étant conçu pour déterminer au cours de la mesure principale (II) des propriétés de mesure de l'objet mesuré,
**caractérisé en ce que**
l'appareil de mesure THz (2) est conçu pour émettre le rayonnement THz (12) au cours de la phase de mesure préliminaire (I) comme premier faisceau d'émission THz (112) le long de l'axe optique (A) avec une première largeur de bande (b1),
et pour émettre au cours de la phase de la mesure principale (II) le faisceau d'émission THz de mesure principale (212) comme second faisceau d'émission THz (212) avec la largeur de bande de mesure principale (b2) le long de l'axe optique (A), la largeur de bande de la mesure principale (b2) étant supérieure à la première largeur de bande (b1) pour une plus haute résolution.

11. Appareil de mesure THz (2) suivant la revendication 10, **caractérisé en ce que** le dispositif de commande (10) est conçu pour déterminer au cours de la mesure principale (II) des propriétés géométriques et/ou des propriétés de matériau de l'objet mesuré, par exemple, l'épaisseur de couche (d3) sous forme de distance entre deux surfaces limites (3a, 3b) et ou des propriétés de matériau au moyen d'une analyse spectroscopique.

12. Appareil de mesure THz (2) suivant une des revendications 10 à 11, **caractérisé en ce qu'**il présente, au niveau de sa zone d'extrémité avant (5), une pièce moulée formant écran (25) avec des lignes de contour (25a, 25b), notamment des paires de lignes de contour arquées destinées à être mises en appui sur la surface externe (3a) de l'objet à mesurer, notamment d'un tube (3), à appui des lignes de contour (25a, 25b) sur la surface externe (3a) de l'objet à mesurer (3), la distance actuelle (d) sous-passant la distance limite (d_tres).

13. Appareil de mesure THz (2) suivant une des revendications 10 à 12, **caractérisé en ce que** l'émetteur-transmetteur (8) est conçu entièrement électronique, notamment comme dipôle d'émission et de réception, par exemple avec une modulation de fréquence ou un rayonnement pulsé,
une résolution plus haute du résultat de mesure pouvant être réalisée au cours de la mesure principale (II) avec la plus grande largeur de bande de mesure principale (b2) pour une détermination précise des propriétés de mesure de l'objet à mesurer, par exemple, une épaisseur de couche (d3) ou analyse spectroscopique.
